# DEMANDE DE BREVET EUROPEEN

(11) **EP 1 555 406 A1**
(43) Date de publication de la demande: **20.07.2005**
(21) Numéro de dépôt: 05100120.4
(22) Date de dépôt: 11.01.2005
(51) Int. Cl.: F02C 7/141, F02K 3/02

(54) **Système de refroidissement de parties chaudes d'un moteur d'aéronef, et moteur d'aéronef équipé d'un tel système de refroidissement**

(30) Priorité: 13.01.2004 FR 0450075
(71) Demandeur: SNECMA MOTEURS, 75015 Paris (FR)
(72) Inventeur: Beutin, Bruno, 91000 EVRY (FR); Mazeaud, Georges, 91330 YERRES (FR); Palmisano, Laurent, 91330 YERRES (FR); Fonquerne, Vincent, Appartement 26, 77000 VAUX LE PENIL (FR); Yvon, Didier, 91170 VIRY CHATILLON (FR)
(74) Mandataire: Poulin, Gérard

(57) **Abrégé**

Le système de refroidissement (30) pour moteur d'aéronef (10) comporte une veine (32) qui prélève de l'air froid dans le flux d'air secondaire (200), et un échangeur de chaleur (34) placé dans la veine (32) et dans lequel circule de l'air chaud.

La veine (32) comporte :
- une canalisation d'alimentation (322) et une canalisation d'évacuation (326) solidaires de la nacelle (324),
- un boîtier intermédiaire (324) situé entre la canalisation d'alimentation (322) et la canalisation d'évacuation (326), solidaire du moteur (10), et dans laquelle est placé l'échangeur de chaleur (34).

Application au refroidissement des parties chaudes (22) d'un moteur d'aéronef (10).

## Description

### DOMAINE TECHNIQUE

La présente invention se rapporte au domaine technique des systèmes de refroidissement de parties chaudes de moteurs d'aéronef.

Elle vise plus particulièrement un système de refroidissement comprenant un ensemble d'échangeurs de chaleur, pour refroidir des parties chaudes d'un moteur d'aéronef, telles que des aubes de turbine haute pression de ce moteur d'aéronef.

Elle vise encore un moteur d'aéronef équipé d'un tel système de refroidissement.

### ETAT DE LA TECHNIQUE ANTERIEURE

Il est connu d'installer des échangeurs de chaleur dans un moteur d'aéronef pour refroidir des parties chaudes du moteur d'aéronef.

Le document FR 2 400 618 divulgue un moteur d'aéronef de type à turbosoufflante mettant en oeuvre un système de refroidissement de type air/air, et un procédé de refroidissement associé. Les pièces chaudes, comme les aubes fixes et mobiles de la turbine haute pression sont refroidies par de l'air de refroidissement provenant d'une partie de l'air primaire prélevé à la sortie du compresseur ou entre les étages du compresseur. Cet air de refroidissement des pièces chaudes est lui-même refroidi au préalable, avant de s'écouler sur les pièces à refroidir, en passant à l'intérieur de canalisations d'un échangeur de chaleur qui est lui-même installé dans un courant d'air plus froid. Ce courant d'air plus froid provient d'une partie de l'air de dilution de la soufflante, ou air secondaire. Il est prélevé dans le canal de soufflante, plus précisément dans un passage d'écoulement annulaire délimité d'un côté par le générateur des gaz et de l'autre côté par une enveloppe qui entoure une partie de la longueur du générateur des gaz. Cette partie d'air de dilution prélevée par l'enveloppe pénètre dans une section de diffuseur où sa pression d'air dynamique est en grande partie récupérée, puis est conduite à travers l'échangeur de chaleur où elle absorbe la chaleur de l'air de refroidissement prélevé au niveau du compresseur. Ensuite, une fois qu'elle a refroidi l'air de refroidissement des pièces chaudes, cette partie d'air de dilution est renvoyée dans le canal de soufflante, sa pression statique étant ramenée à la pression statique régnant dans le canal de soufflante.

Le document US 5 269 135 divulgue un système de refroidissement de type air/carburant, qui comporte au moins un échangeur de chaleur dans lequel circule du carburant. Cet échangeur de chaleur est placé dans une veine où circule de l'air plus froid prélevé en amont dans le canal de soufflante et restitué en aval dans le canal de soufflante. La veine est en partie délimitée par la paroi intérieure du canal de soufflante lui-même.

Les systèmes de refroidissement qui viennent d'être décrits présentent un certain nombre d'inconvénients.

Un premier inconvénient a trait à la maintenance du moteur, et notamment du générateur des gaz. En l'absence de système de refroidissement, la maintenance s'effectue en ouvrant un capot de la nacelle pour accéder directement au moteur, et notamment aux injecteurs de carburant. En présence d'un système de refroidissement de la technique antérieure, et notamment en présence de l'enveloppe autour du générateur des gaz ou d'une veine solidaire de la nacelle, il devient difficile d'accéder à certaines pièces du moteur pour leur maintenance.

Un deuxième inconvénient des systèmes de la technique antérieure réside dans le fait que l'air plus froid servant à refroidir le fluide circulant dans l'échangeur de chaleur est restitué, en aval, à l'intérieur du canal de soufflante. Sa pression est donc ramenée à la pression régnant à l'intérieur du canal de soufflante à cet endroit. On risque alors de se trouver dans une situation dans laquelle l'air pourrait circuler en sens inverse ou ne plus circuler, ce qui rendrait l'échangeur de chaleur inopérant.

### EXPOSÉ DE L'INVENTION

La présente invention se propose d'apporter une solution aux inconvénients des systèmes de la technique antérieure.

Selon un premier aspect de l'invention, le système de refroidissement de parties chaudes d'un moteur d'aéronef s'applique à un moteur d'aéronef logé dans une nacelle, un flux d'air primaire s'écoulant dans le moteur et un flux d'air secondaire s'écoulant autour du moteur à l'intérieur de la nacelle. Le système de refroidissement comporte au moins une veine qui prélève de l'air froid dans le flux d'air secondaire, et au moins un échangeur de chaleur placé dans la veine et dans lequel circule de l'air chaud provenant du flux d'air primaire pour être refroidi avant d'arriver sur les parties chaudes pour les refroidir. Ladite au moins une veine comporte les trois parties suivantes :
- une canalisation d'alimentation située en amont dudit au moins un échangeur de chaleur, ladite canalisation d'alimentation étant solidaire de la nacelle,
- une canalisation d'évacuation située en aval dudit au moins un échangeur de chaleur, ladite canalisation d'évacuation étant solidaire de la nacelle,
- un boîtier intermédiaire situé entre la canalisation d'alimentation et la canalisation d'évacuation, dans lequel est placé ledit au moins un échangeur de chaleur, ledit boîtier intermédiaire étant solidaire du moteur.

Avantageusement, le boîtier intermédiaire présente, en coupe longitudinale, un profil ayant sensiblement la forme d'un rectangle.

De manière préférée, le boîtier intermédiaire présente, en coupe longitudinale, un profil ayant sensiblement la forme d'un trapèze dont la grande base se trouve en regard du moteur et dont la petite base se trouve en regard de la nacelle.

De préférence, le système de refroidissement comporte en outre un joint d'étanchéité amont entre la canalisation d'alimentation et le boîtier intermédiaire et un joint d'étanchéité aval entre le boîtier intermédiaire et la canalisation aval.

Selon l'invention, chaque échangeur de chaleur est associé à :
- au moins un conduit d'amenée, qui prélève de l'air du flux d'air primaire, chaud, et l'amène dans l'échangeur de chaleur, pour le refroidir, et
- au moins un conduit de renvoi, qui recueille l'air refroidi dans l'échangeur de chaleur et le renvoie vers les parties chaudes du moteur, pour les refroidir.

De préférence, chaque conduit d'amenée comporte à l'une de ses extrémités une bride de fixation pour sa fixation sur le moteur. De manière similaire, chaque conduit de renvoi comporte à l'une de ses extrémités une bride de fixation pour sa fixation sur le moteur. Toutes ces brides de fixation réalisent une fixation mécanique du boîtier sur le moteur.

Selon une variante, l'un au moins des conduits d'amenée est muni d'une vanne.

Selon une autre variante, l'un au moins des conduits de renvoi est muni d'une vanne.

Selon une variante particulière, chaque échangeur de chaleur est associé à quatre conduits d'amenée et à quatre conduits de renvoi.

Selon l'invention, la sortie de la canalisation d'évacuation de chaque veine débouche au niveau de la sortie de la tuyère d'éjection de la nacelle, ou au-delà, vers l'aval. Ainsi, l'air qui sort de la canalisation d'évacuation se trouve à pression atmosphérique. Par suite, le risque de re-circulation de l'air dans l'échangeur de chaleur est supprimé, et les pertes de charge dans l'échangeur de chaleur sont augmentées.

Selon une variante préférée, la canalisation d'alimentation de chaque veine a une section de sortie supérieure à sa section d'entrée.

Selon une autre variante préférée, la canalisation d'évacuation de chaque veine a une section de sortie inférieure à sa section d'entrée.

De préférence, le système de refroidissement comporte au moins deux échangeurs de chaleur répartis circonférentiellement autour du moteur, chaque échangeur de chaleur étant placé dans une veine distincte. De manière plus préférée, les échangeurs de chaleur sont au nombre de quatre.

Selon une autre variante, le système de refroidissement comporte un seul échangeur de chaleur s'étendant sur toute la circonférence du moteur et placé dans une seule veine annulaire correspondante.

Selon un deuxième aspect, l'invention concerne un moteur d'aéronef équipé d'un système de refroidissement selon le premier aspect de l'invention.

### BRÈVE DESCRIPTION DES DESSINS

L'invention sera mieux comprise à la lecture de la description détaillée qui va suivre de modes de réalisation particuliers de l'invention, fournis à titre illustratif et nullement limitatif, en référence aux dessins annexés, dans lesquels :
- la figure 1 est une vue schématique en coupe longitudinale d'un moteur d'aéronef comportant un système de refroidissement selon l'invention ;
- la figure 2 est une vue en perspective arrière montrant l'arrière d'un moteur d'aéronef comportant un système de refroidissement selon l'invention ; et
- la figure 3 est une autre vue en perspective arrière du moteur, une partie arrière ayant été enlevée au niveau du système de refroidissement, montrant en coupe l'agencement des échangeurs de chaleur.

### EXPOSÉ DÉTAILLÉ DE MODES DE RÉALISATION PARTICULIERS

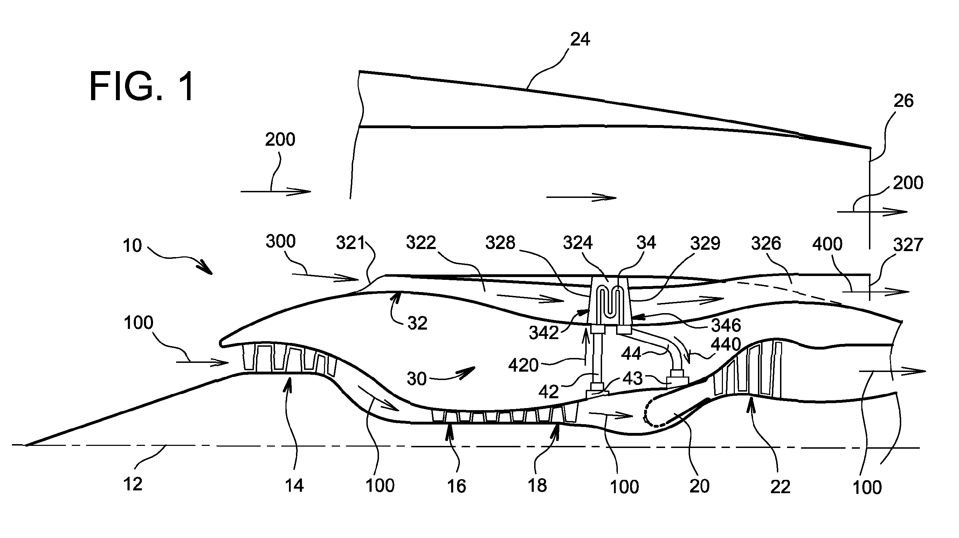

En se référant à la figure 1, on a représenté schématiquement un moteur d'aéronef 10 ayant un axe de révolution 12.

De manière connue en soi, le moteur d'aéronef 10 comporte des étages de compresseur basse pression 14, des étages de compresseur moyenne pression 16, des étages de compresseur haute pression 18, une chambre de combustion 20, et des turbines 22. Le moteur d'aéronef 10 est entouré par une nacelle 24 qui se termine par une tuyère d'éjection 26.

De manière connue en soi, un flux d'air primaire, représenté par les flèches 100, circule à l'intérieur du moteur 10. Il est échauffé en traversant les étages de compresseur 14, 16, 18, avant de parvenir aux turbines 22.

De manière connue en soi, un flux d'air secondaire, représenté par les flèches 200, circule dans la nacelle 24 autour du moteur 10. Cet air secondaire 200, extérieur au moteur 10, est plus froid que l'air primaire 100, intérieur au moteur 10.

Selon l'invention, le moteur 10 comporte un système de refroidissement 30, destiné à refroidir des parties chaudes du moteur 10, telle que par exemple les aubes des turbines 22. Le principe de ce système de refroidissement consiste à refroidir de l'air qui s'écoule ensuite sur, ou dans, des pièces chaudes à refroidir.

Le système de refroidissement 30 comporte au moins une veine 32, dans laquelle circule de l'air (flèches 300, 400) prélevé dans l'écoulement d'air secondaire de la nacelle 24 ainsi qu'au moins un échangeur de chaleur 34, placé dans cette veine 32. Cet échangeur de chaleur 34 peut être par exemple un échangeur à tubes ou un échangeur à plaques.

Chaque veine 32 comporte trois parties successives :
- une canalisation d'alimentation 322, solidaire de la nacelle 24 et située en amont par rapport au sens d'écoulement d'air (flèches 100, 200, 300, 400),
- une canalisation d'évacuation 326, solidaire de la nacelle 24 et située en aval par rapport au sens d'écoulement d'air (flèches 100, 200, 300, 400),
- un boîtier intermédiaire 324, solidaire du moteur 10 et situé entre la canalisation d'alimentation 322 et la canalisation d'évacuation 326.

La jonction 342 entre la canalisation d'alimentation 322 et le boîtier intermédiaire 324 se fait par une mise en continuité de la section de sortie 323 de la canalisation d'alimentation 322 et de la section d'entrée 328 du boîtier intermédiaire 324, qui présentent à cet effet des dimensions sensiblement identiques. Cette jonction 342 est complétée par la présence d'un joint d'étanchéité amont (non représenté) qui s'adapte auxdites sections.

De manière similaire, la jonction 346 entre le boîtier intermédiaire 324 et la canalisation d'évacuation 326 se fait par une mise en continuité de la section de sortie 329 du boîtier intermédiaire 324 et de la section d'entrée 325 de la canalisation d'évacuation 326, qui présentent à cet effet des dimensions sensiblement identiques. Cette jonction 346 est complétée par la présence d'un joint d'étanchéité aval (non représenté) qui s'adapte auxdites sections.

De préférence, les sections d'extrémité du boîtier intermédiaire 324 au niveau des jonction 342, 346 respectives présentent, en coupe longitudinale, un profil ayant sensiblement une forme de trapèze dont la grande base se trouve en regard du moteur 10 et dont la petite base se trouve en regard de la nacelle 24.

L'entrée 321 de la veine 32, qui se situe au niveau de l'entrée de la canalisation d'alimentation 322, peut être une entrée d'air statique ou une entrée d'air dynamique.

La sortie 327 de la veine 32, qui est la sortie de la canalisation d'évacuation 326, est agencée de manière à sensiblement coïncider avec l'extrémité libre de la tuyère d'éjection de la nacelle 24. Ainsi, l'air évacué par la canalisation d'évacuation 326 se trouve à pression atmosphérique.

L'échangeur de chaleur 34 est installé dans le boîtier intermédiaire 324 de la veine 32.

Ce boîtier intermédiaire 324 se trouve en regard du moteur 10, à une certaine distance de celui-ci. Il est relié au moteur 10 au moyen d'au moins un conduit d'amenée 42, qui sert à amener (flèche 420) de l'air prélevé à la sortie du compresseur 14, 16, 18 vers l'échangeur de chaleur 34, pour que cet air soit refroidi, et d'au moins un conduit de renvoi 44, qui sert à renvoyer cet air refroidi vers les turbines 22 (flèche 440).

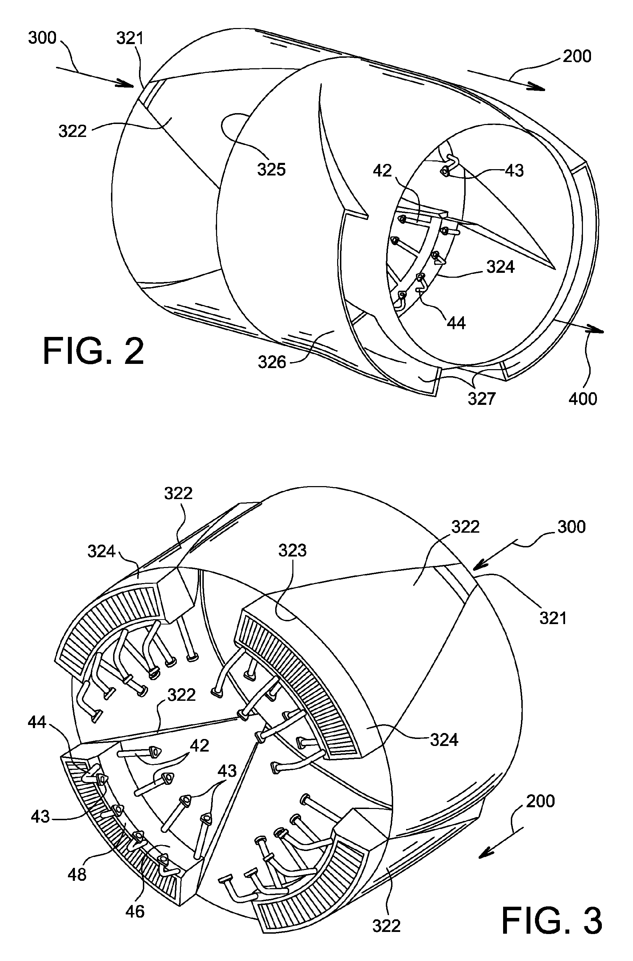

Les figures 2 et 3 illustrent plus en détail un exemple de système de refroidissement 30 selon l'invention, qui comporte quatre veines 32, réparties sur la périphérie de la nacelle 24. Pour simplifier les figures, le moteur 10 n'est pas représenté sur ces figures. Les flèches 200 indiquent le sens d'écoulement de l'air secondaire, et indiquent donc l'amont et l'aval des veines 32.

Sur la figure 2 est illustré un exemple de système de refroidissement selon l'invention montrant plus particulièrement les veines 32, ainsi que leurs canalisations d'alimentation 322 et leurs canalisations d'évacuation 326.

Selon le mode de réalisation du système de refroidissement illustré, les canalisations d'alimentation 322 ont une section d'entrée 321 plus petite que leur section de sortie 323. Ainsi, l'air (flèches 300) provenant de la nacelle 24 est ralenti dans les canalisations d'alimentation 322, avant d'arriver au niveau des échangeurs de chaleur 34 où il est réchauffé au contact de ceux-ci. De manière similaire, les canalisations d'évacuation 326 ont une section d'entrée 325 identique à leur section de sortie 327. Ainsi, l'air (flèches 400) qui a été réchauffé au contact des échangeurs de chaleur 34 n'est pas accéléré dans les canalisations d'évacuation, avant de sortir vers l'extérieur, de manière à limiter les pertes de charge.

Sur la figure 3, seules sont représentées les canalisations d'alimentation 322 et les boîtiers intermédiaires 324 des veines 32.

Cette figure montre de façon plus détaillée les boîtiers intermédiaires 324 dans lesquels sont logés les échangeurs de chaleur 34, ainsi que les conduits d'amenée 42 et les conduits de renvoi 44. Sur l'exemple représenté, les conduits d'amenée 42 sont au nombre de quatre par boîtier intermédiaire 324 et sont disposés du côté amont des boîtiers intermédiaires 324. De manière similaire, les conduits de renvoi sont au nombre de quatre par boîtier intermédiaire 324 et sont situés du côté aval des boîtiers intermédiaires 324.Les conduits d'amenée 42 et les conduits de renvoi 44 se terminent, du côté du moteur 10, par des brides de fixation 43 destinées à solidariser les boîtiers intermédiaires 324 avec ledit moteur 10. Ainsi, les conduits d'amenée 42 et les conduits de retour 44 servent également de moyens de fixation des boîtiers intermédiaires 324, et donc des échangeurs de chaleur 34 associés sur le moteur 10.

Les conduits d'amenée 42 sont fixés sur chaque boîtier intermédiaire 324 au niveau d'un distributeur 46 qui sert à alimenter tous les tubes ou toutes les plaques du ou des échangeur(s) de chaleur 34 se trouvant sans le boîtier intermédiaire 324. L'air qui vient d'être refroidi au contact du ou des échangeur(s) de chaleur 34 est collecté par un collecteur 48 sur lequel sont fixés les conduits de renvoi 44.

Sur l'exemple illustré aux figures, les conduits d'amenée 42 sont sensiblement rectilignes et prélèvent de l'air directement à la sortie du compresseur 14, 16, 18 pour l'amener aux échangeurs de chaleur 34. Les conduits de renvoi 44, quant à eux, sont coudés, de manière à ramener l'air, qui est passé dans les échangeurs de chaleur 34, plus en aval à l'entrée des turbines 22.

Le système de refroidissement qui vient d'être décrit présente un certain nombre d'avantages.

Un premier avantage est lié à la maintenance de certaines pièces du moteur 10, comme par exemple les injecteurs de carburant (non représentés). Selon l'invention, la canalisation d'alimentation 322 et la canalisation d'évacuation 326 de chaque veine 32 sont solidaires de la nacelle 24, tandis que le boîtier intermédiaire 324 est solidaire du moteur 10. Par suite, il est préférable d'agencer la canalisation d'alimentation 322 et la canalisation d'évacuation 326 de telle sorte qu'elles soient fixées sur un capot d'ouverture (non représenté) de la nacelle 24. Ainsi, lors de l'ouverture du capot, ces deux canalisations 322, 326 sont soulevées en même temps que le capot, tandis que le boîtier intermédiaire 324 contenant un ou plusieurs échangeur(s) de chaleur 34 reste solidaire du moteur 10. Il est donc aisé pour un opérateur, d'accéder au moteur, même en présence d'une veine 32, du fait que celle-ci est réalisée à partir de trois parties distinctes 322, 324, 326.

Comme de plus le boîtier intermédiaire 324 reste maintenu à distance du moteur 10 grâce à la présence des conduits d'amenée 42 et des conduits de renvoi 44, il devient aisé pour un opérateur d'accéder à des pièces du moteur, même dans une zone située sous le boîtier intermédiaire 324 lui-même, en passant entre les conduits d'amenée 42 et les conduits de renvoi 44. Par conséquent, il suffit de positionner le boîtier intermédiaire 324 en regard de la chambre de combustion 20 pour pouvoir accéder aisément aux injecteurs de carburant pour leur maintenance.

Un autre avantage est lié à la forme trapézoïdale du profil du boîtier intermédiaire 324. Il résulte de cette forme que, lors de la fermeture du capot de la nacelle 24, la section de sortie 323 de la canalisation d'alimentation 322 de chaque veine 32 recouvre la section d'entrée 328 du boîtier intermédiaire 324. De manière similaire, la section d'entrée 325 de la canalisation d'évacuation 326 recouvre la section de sortie 329 du boîtier intermédiaire 324. Un tel agencement permet d'assurer une bonne coïncidence de la canalisation d'alimentation 322 et de la canalisation d'évacuation 326 avec le boîtier intermédiaire 324 lors de la fermeture du capot, et donc d'assurer une bonne étanchéité de la veine 32 au niveau des jonctions 342 et 346. Cette étanchéité peut être encore améliorée par la présence de joints d'étanchéité sur la périphérie des jonctions 342, 346.

Le système de refroidissement qui vient d'être décrit est un système de refroidissement passif, c'est-à-dire que le débit d'air prélevé au niveau du compresseur haute pression 18 (flèche 420) est proportionnel au débit d'air de refroidissement de la turbine haute pression 22 (flèches 440). On pourrait envisager, sans sortir de l'invention, un système de refroidissement actif, qui comporterait au moins une vanne (non représentée) placée sur les conduits d'amenée 42 ou sur les conduits de renvoi 44. Il serait alors possible, en commandant l'ouverture et/ou la fermeture de ces vannes, d'améliorer les performances de vol du moteur, au détriment d'une augmentation de sa masse, en fonction des différentes phases de vol.

Dans le système de refroidissement qui vient d'être décrit, chaque échangeur de chaleur est associé à quatre conduits d'amenée et à quatre conduits de sortie. On pourrait envisager, sans sortir de l'invention, que le nombre de conduits d'amenée et le nombre de conduits de sortie soient différents de quatre, et/ou qu'ils soient différents l'un de l'autre.

Dans le système de refroidissement qui vient d'être décrit, la sortie de la veine coïncide avec l'extrémité libre de la tuyère d'éjection de la nacelle. On pourrait envisager que la veine dépasse au-delà de l'extrémité libre de la tuyère d'éjection, vers l'aval.

## Revendications

1. Système de refroidissement (30) de parties chaudes (22) d'un moteur d'aéronef (10),
le moteur d'aéronef (10) étant logé dans une nacelle (24), un flux d'air primaire (100) s'écoulant dans le moteur et un flux d'air secondaire (200) s'écoulant autour du moteur (10) à l'intérieur de la nacelle (24),
système de refroidissement (30) **caractérisé en ce qu'**il comporte au moins une veine (32) qui prélève de l'air froid (300) dans le flux d'air secondaire (200), et au moins un échangeur de chaleur (34) placé dans la veine (32) et dans lequel circule de l'air chaud (420) provenant du flux d'air primaire (100) pour être refroidi avant d'arriver (440) sur les parties chaudes (22) pour les refroidir,
et **en ce que** ladite au moins une veine (32) comporte les trois parties suivantes :
- une canalisation d'alimentation (322) située en amont de l'au moins un échangeur de chaleur (34), ladite canalisation d'alimentation (322) étant solidaire de la nacelle (24),
- une canalisation d'évacuation (326) située en aval de l'au moins un échangeur de chaleur (34), ladite canalisation d'évacuation (326) étant solidaire de la nacelle (24),
- un boîtier intermédiaire (324) situé entre la canalisation d'alimentation (322) et la canalisation d'évacuation (326), dans lequel est placé l'au moins un échangeur de chaleur (34), ledit boîtier intermédiaire (324) étant solidaire du moteur (10).

2. Système de refroidissement (30) selon la revendication 1, **caractérisé en ce que** le boîtier intermédiaire (324) présente, en coupe longitudinale, un profil ayant sensiblement la forme d'un trapèze dont la grande base est en regard du moteur (10) et dont la petite base est en regard de la nacelle (24).

3. Système de refroidissement (30) selon la revendication 1 ou 2, **caractérisé en ce qu'**il comporte en outre un joint d'étanchéité amont entre la canalisation d'alimentation (322) et le boîtier intermédiaire (324) et un joint d'étanchéité aval entre le boîtier intermédiaire (324) et la canalisation d'évacuation (326).

4. Système de refroidissement (30) selon l'une quelconque des revendications 1 à 3, **caractérisé en ce que** chaque boîtier intermédiaire (324) est associé à :
- au moins un conduit d'amenée (42), qui prélève de l'air (420) du flux d'air primaire (100) et l'amène dans l'échangeur de chaleur (34), et
- au moins un conduit de renvoi (44), qui recueille l'air refroidi (440) dans l'échangeur de chaleur (34) et le renvoie vers les parties chaudes (22) du moteur (10).

5. Système de refroidissement (30) selon la revendication 4, **caractérisé en ce que** chaque conduit d'amenée (42) et chaque conduit de renvoi (44) comporte à l'une de ses extrémités une bride de fixation (43) pour sa fixation sur le moteur (10).

6. Système de refroidissement (30) selon la revendication 5, **caractérisé en ce que** l'un au moins des conduits d'amenée (42) est muni d'une vanne.

7. Système de refroidissement (30) selon la revendication 5 ou 6, **caractérisé en ce que** l'un au moins des conduits de renvoi (44) est muni d'une vanne.

8. Système de refroidissement (30) selon l'une quelconque des revendications 5 à 7, **caractérisé en ce que** chaque boîtier intermédiaire (324) est associé à quatre conduits d'amenée (42) et à quatre conduits de renvoi (44).

9. Système de refroidissement (30) selon l'une quelconque des revendications 1 à 8, **caractérisé en ce que** la sortie (327) de la canalisation d'évacuation (326) de chaque veine (32) débouche au niveau de la sortie d'une tuyère d'éjection (26) de la nacelle (24), ou au-delà vers l'aval.

10. Système de refroidissement (30) selon l'une quelconque des revendications 1 à 9, **caractérisé en ce que** la canalisation d'alimentation (322) de chaque veine (32) a une section de sortie (323) supérieure à sa section d'entrée (321).

11. Système de refroidissement (30) selon l'une quelconque des revendications 1 à 10, **caractérisé en ce que** la canalisation d'évacuation (326) de chaque veine (32) a une section de sortie (327) identique à sa section d'entrée (325).

12. Système de refroidissement (30) selon l'une quelconque des revendications 1 à 11, **caractérisé en ce qu'**il comporte au moins deux échangeurs de chaleur (34) répartis circonférentiellement autour du moteur (10), et **en ce que** chaque échangeur de chaleur (34) est placé dans une veine distincte (32).

13. Système de refroidissement (30) selon l'une quelconque des revendications 1 à 11, **caractérisé en ce qu'**il comporte un seul échangeur de chaleur (34) s'étendant sur toute la circonférence du moteur (10) et **en ce que** cet échangeur de chaleur (34) est placé dans une seule veine annulaire (32) correspondante.

14. Moteur d'aéronef (10), **caractérisé en ce qu'**il est équipé d'un système de refroidissement (30) selon l'une quelconque des revendications 1 à 13.
